# EUROPÄISCHE PATENTSCHRIFT

(11) **EP 2 462 381 B1**
(45) Veröffentlichungstag und Bekanntmachung des Hinweises auf die Patenterteilung: **30.04.2014**
(21) Anmeldenummer: 10737511.5
(22) Anmeldetag: 21.07.2010
(51) Int. Cl.: F23M 5/00

(54) **GEGENSTROMBRENNER**
COUNTER-FLOW COMBUSTOR
BRÛLEUR À CONTRE-FLUX

(30) Priorität: 03.08.2009 DE 102009035762
(43) Veröffentlichungstag der Anmeldung: 13.06.2012
(73) Patentinhaber: Bayer Intellectual Property GmbH, 40789 Monheim (DE); KROHNE Messtechnik GmbH, 47058 Duisburg (DE)
(72) Erfinder: MÜLLER, Jörg, 21244 Buchholz (DE); KUIPERS, Winfred, 22765 Hamburg (DE)
(74) Vertreter: BIP Patents
(86) Internationale Anmeldenummer: PCT/EP2010/004441
(87) Internationale Veröffentlichungsnummer: WO 2011/015285

(56) Entgegenhaltungen:
- EP-A1- 0 599 166
- EP-A1- 2 037 264
- US-A1- 2002 187 447
- US-B1- 6 193 501
- US-B2- 7 077 643
- Stefan Zimmermann, Peter Krippner, Albrecht Vogel, Jörg Müller: "Miniaturized flame ionization detector for gas chromatography", Sensors and Actuators, Bd. B 83 31. Dezember 2002 (2002-12-31), Seiten 285-289, XP002684811, Gefunden im Internet: URL:www.ncbi.nlm.nih.gov/pubmed/16176647 [gefunden am 2012-10-05]
- SPADACCINI C M ET AL: "Preliminary development of a hydrocarbon-fueled catalytic micro-combustor", SENSORS AND ACTUATORS A, ELSEVIER SEQUOIA S.A., LAUSANNE, CH, Bd. 103, Nr. 1-2, 15. Januar 2003 (2003-01-15), Seiten 219-224, XP004400403, ISSN: 0924-4247, DOI: 10.1016/S0924-4247(02)00335-7
- KULPERS WINFRIED ET AL: "Influence of Micro-Burner Geometry on Flame Stability", MIKROSYSTEMTECHNIK KONGRESS 2009; 12.-14. OKTOBER 2009 / BERLIN, PROCEEDINGS, VDE VERLAG GMBH, BERLIN OFFENBACH, 12. Oktober 2009 (2009-10-12), Seiten Paper-p2.1/1, XP009143315, ISBN: 978-3-8007-3183-1

## Beschreibung

Die Erfindung betrifft einen Gegenstrombrenner mit einer Brennkammer, der das Brenngas und das Oxidationsmittel von entgegen gesetzten Seiten zuführbar sind.

Wenn Brenngas und Oxidationsmittel (z.B. Wasserstoff und Sauerstoff) aus entgegen gesetzten Richtungen aufeinander auftreffen, heben sich ihre Impulse wenigstens teilweise auf. Man erhält so eine Flammenform, die sich nicht nur länglich, sondern auch kugelförmig gestalten lässt. Dies ist mit einer Vormischflamme nicht. der Fall, da dort beide Gase im Wesentlichen in einer Richtung strömen. Auch eine Diffusionsflamme ist weniger vorteilhaft, da dort Diffusion stattfinden muss. Die Flamme weist auch einen Abstand von den Düsen auf, so dass über die Düsen nur wenig Wärme abgeführt wird. Auch sind geringere Gasgeschwindigkeiten möglich, insbesondere geringere Abgasgeschwindigkeiten, wodurch Wärmeverluste durch erzwungene Konvektion verringert werden.

All dies liefert dabei Beitrage, die Flammentemperatur zu erhöhen. Schließlich erhält man auch eine größere Aufenthaltsdauer des zu untersuchenden Probengases in der Brennkammer. Die Kugelform ist für die Flammenstabilität aufgrund der minimalen Oberfläche, über die die Wärme abgegeben wird, im Vergleich mit dem Volumen, in dem die Wärme erzeugt wird, besonders günstig.

Dies ist extrem wichtig, wenn man nur sehr kleine Flammen verwenden will, wie dies z.B. in miniaturisierten wissenschaftlichen Instrumenten oder Gasdetektoren erforderlich ist. Für solche Untersuchungen sind miniaturisierte Gegenstrombrenner bekannt, bei denen die Brennkammer durch eine Kapillare aus nicht rostendem Stahl umgeben ist (US2005/0287033A1, US2008/0213908A1). Die Herstellung entsprechender kleiner Kapillaren ist zwar möglich. Der Zusammenbau entsprechender Gegenstrombrenner, die aus unterschiedlichen Teilen bestehen, bereitet aber erhebliche Schwierigkeiten und Kosten, insbesondere dann, wenn man möglichst kleine Strukturen verwenden möchte und diese in Serienanfertigung hergestellt werden sollen. Außerdem erstreckt sich eine Kapillare nur in einer Richtung, ist also ein im Wesentlichen eindimensionales Gebilde, so dass nur verhältnismäßig geringe Möglichkeiten bestehen, die Flamme zu beeinflussen.

Anwendung finden diese Mikrogegenstrombrenner z.B. für fotometrische Gaschromatographie und Gaschromatographie mit Messung der erzeugten Ionisation. Entsprechende Vorrichtungen können dabei nicht nur wissenschaftlichen Zwecken dienen, sondern sind auch z.B. geeignet, in der Umwelttechnik eingesetzt zu werden, um schädliche Gase festzustellen.

Eine miniaturisierte Brennkammer, welche im Wesentlichen aus drei planaren Substraten besteht, ist in der Druckschrift US 6 840 762 B2 offenbart*.*

Die Aufgabe der Erfindung besteht in Erschaffung eines Gegenstrombrenners geringer Abmessungen, der kostengünstig herzustellen ist.

Die erfindungsgemäße Lösung besteht darin, dass der Gegenstrombrenner drei planare Substrate aufweist, die übereinander liegend miteinander verbunden sind, dass das mittlere Substrat die Brennkammer aufweist, von der in der Ebene des Substrats liegende Kanäle in entgegen gesetzten Richtungen zum Rand führen, und die durch die Kanäle eingeführten Gase aus entgegengesetzten Richtungen in der Brennkammer aufeinander stoßen, dass das obere und das untere Substrat im wesentlichen geschlossen sind und dass zumindest das mittlere Substrat mit Methoden der Mikrosystemtechnik hergestellt ist.

Der Gegenstrombrenner besteht also nicht mehr im Wesentlichen aus Kapillaren, sondern aus planaren Strukturen. Diese können besonders gut bearbeitet werden, insbesondere auch mit den Methoden der Mikrosystemtechnik, so dass man sehr kleine Gegenstrombrenner erhalten kann. Im mittleren Substrat ist die Brennkammer angeordnet, von der in der Ebene des Substrats liegende Kanäle in entgegen gesetzten Richtungen zum Rand führen. Dieses mittlere Substrat mit der Brennkammer und den Kanälen ist dann durch im Wesentlichen geschlossene obere und untere Substrate abgedeckt.

Die zunächst offenen Kanäle und die offene Brennkammer, die durch die bekannten Verfahren der Mikrosystemtechnik hergestellt sind, werden durch diese oberen und unteren Substrate zumindest im Wesentlichen verschlossen. Da die Kanäle in entgegen gesetzten Richtungen von der Brennkammer zum Rand führen, stoßen die durch diese Kanäle eingeführten Gase aus entgegen gesetzten Richtungen aufeinander, wodurch der Impuls wenigstens teilweise kompensiert wird.

In einer bevorzugten Ausführungsform sind zwei solche aufeinander zu gerichteten Kanäle vorgesehen, wobei durch einen das Brenngas und durch den anderen das Oxidationsmittel der Brennkammer zugeführt wird.

In einer weiteren bevorzugten Ausführungsform verschließt das obere und das untere Substrat das mittlere Substrat vollständig. Die Zufuhr von Brenngas und Oxidationsmittel sowie die Abfuhr der Abgase geschieht damit in der Ebene des mittleren Substrats am Rand desselben. Durch die Anordnung der Kanäle wird dabei dafür gesorgt, dass die Gase jeweils in geeigneter Weise aufeinander treffen. Die Abgase können dann durch entsprechende Kanäle, die ebenfalls in entgegen gesetzten Richtungen von der Brennkammer ausgehen, abgeführt werden.

Eine bevorzugte Ausführungsform zeichnet sich dadurch aus, dass die in der Ebene des Substrats liegenden Kanäle sternförmig von der Brennkammer zum Rand führen. Man hat dadurch nicht nur von zwei Seiten Zugang zur Brennkammer, sondern von mehreren Seiten, was zur Kontrolle bzw. Vergleichmäßigung der Flamme dienen kann.

Im Gegensatz zu Fällen, wo Brenngas und Oxidationsmittel aus entgegen gesetzten Richtungen auftreffen, kann der Nettoimpuls der aufeinander treffenden Gase dann sogar zu Null gemacht werden.

Treffen Sauerstoff und die doppelte Menge von Wasserstoff aufeinander, um als Knallgas zu verbrennen, so hat der Sauerstoff aufgrund des größeren Molekulargewichts einen größeren Impuls als der Wasserstoff, so dass sich die Impulse nicht völlig zu Null addieren. Bei der sternförmigen Anordnung der Erfindung kann man jedoch die Gase von mehreren Seiten aufeinander treffen lassen und dabei immer zwei Sauerstoffstrome und zwei Brenngasstrome aus genau entgegen gesetzten Richtungen aufeinander treffen lassen, so dass sich der Gesamtimpuls zu Null addiert.

Man erhält so eine besonders gute Kugelform und damit auch besonders hohe Temperatur der Flamme. Eine Kompensation der Impulse kann man aber auch dadurch erreichen, wenn die zu untersuchenden Probe Luft ist, die ja zu 80% aus Stickstoff besteht. Wird die zu untersuchende Luft dem Wasserstoff-Brenngas zugemischt, hat dieses Gas ungefähr das gleiche Molekulargewicht wie der von der entgegengesetzten Richtung zugeführte Sauerstoff. Bei der sternförmigen Anordnung ist dabei auch ein Sauerstoffüberschuss möglich, was eine höhere Ionenausbeute ergibt.

Bei einer bevorzugten Ausführungsform schließen das obere und das untere Substrat das mittlere Substrat vollständig ab, so dass alle Gase in der Ebene des mittleren Substrats in die Brennkammer eintreten und dieselbe verlassen. Bei einer weiteren bevorzugten Ausführungsform weisen das obere und das untere Substrat zur Brennkammer führende Bohrungen auf, durch die Gas in Richtung senkrecht zur Ebene des Substrats eintreten bzw. austreten kann. Selbstverständlich müssen hier jeweils zwei Öffnungen gegenüberliegen, damit das Gas in entgegen gesetzten Richtungen durch die beiden Öffnungen eintreten oder austreten kann.

Alle diese Ausführungsformen haben den Vorteil, dass sie lageunabhängig arbeiten. Sie müssen also für den Betrieb nicht genau ausgerichtet werden und können sogar auf den Kopf gestellt werden.

Vorteilhafterweise besteht das mittlere Substrat aus Silizium, das sich mithilfe der Mikrosystemtechnik besonders gut bearbeiten lässt.

Bei einer weiteren bevorzugten Ausführungsform besteht das obere und/oder das untere Substrat aus Borosilikatglas. Einerseits kann dieses Borosilikatglas ebenfalls mithilfe der Mikrosystemtechnik strukturiert werden. Es lässt sich auch mit dem anodischen Bondverfahren mit Silizium verbinden, so dass die Herstellung des Gegenstrombrenners der Erfindung keine Probleme bereitet. Schließlich hat es auch eine niedrige thermische Leitfähigkeit, wodurch Wärmeverluste verringert werden, was die Flammenstabilität und Flammentemperatur erhöht. Die Kanäle können mithilfe der Mikrosystemtechnik im mittleren Substrat beliebig geformt werden. Sie können dabei auch so ausgebildet werden, dass Wärmetauscher gebildet werden, indem die Abgaskanäle wenigstens am Rand des mittleren Substrats sehr nahe bei den Kanälen für das Brenngas oder Oxidationsmittel vorgesehen sind und nur im mittleren Teil sternförmig auf die Brennkammer zulaufen.

Zweckmäßigerweise sind die Kanäle für mindest eine der Gasströmungen mit einer den Gegenstrombrenner umgebenden Druckausgleichskammer verbunden, um sicher zu sein, dass tatsächlich durch alle Kanäle das Brenngas und/oder das Oxidationsmittel mit gleicher Geschwindigkeit eintritt bzw. die Abgase austreten.

Bei einer vorteilhaften Ausführungsform sind in der Brennkammer die Flamme stabilisierende Elemente auf dem oberen und/oder unteren Substrat angebracht. Dies können z.B. zylinderförmige Elemente sein die die eigentliche Flamme zylinderförmig umschließen.

Zweckmäßigerweise sind bei der sternförmigen Anordnung die Kanäle auf den Mittelpunkt der Brennkammer gerichtet, damit sich die Impulse der eintretenden Gasstrome zu Null addieren. Es ist aber auch möglich, die Kanäle tangential auf den Umfang eines gedachten Zylinders zu richten, der koaxial in der Brennkammer angeordnet ist.

Die oberen und/oder unteren Substrate können im Bereich der Brennkammer mit die Verbrennung beschleunigenden Materialien beschichtet sein, z. B. mit Platin, das mit Verfahren der Mikrosystemtechnik wie Kathodenzerstäubung oder Aufdampfen aufgebracht wird.

Wie dies oben erwähnt wurde, tritt beim Aufeinandertreffen gleicher Mengen von Wasserstoff und Sauerstoff kein resultierender Gesamtimpuls null auf. Dies gilt zumindest bei gleichen Strömungsgeschwindigkeiten. Eine zusätzliche zu den obengenannten Maßnahmen, dieses Problem zu vermeiden oder zumindest zu verringern, besteht darin, den Sauerstoff mit geringerer Geschwindigkeit als den Wasserstoff in die Brennkammer eintreten zu lassen. Dies kann insbesondere dadurch erreicht werden, dass die Kanäle im zur Brennkammer gerichteten Endbereich unterschiedliche Querschnitte aufweisen, nämlich einen größeren Querschnitt in den für den Sauerstoff vorgesehenen Kanälen.

Wie erwähnt können auch das obere und das untere Substrat mit Methoden der Mikrosystemtechnik strukturiert werden/ um z.B. die Brennkammer in diese Substrate hineinreichen zu lassen oder um die Querschnitte der Kanäle zu erhöhen.

Die Mikrosystemtechnik bietet weiter den Vorteil, dass auch noch weitere für den speziellen Anwendungszweck wichtige Eigenschaften und Formen erreicht werden können.

Wie dies eingangs erwähnt wurde, ist eine der vielen Anwendungen eines Gegenstrombrenners mit niedrigem Gasverbrauch der Flammenionisationsdetektor. Es ist zwar bekannt, einen Flammenionisationsdetektor mithilfe der Mikrosystemtechnik herzustellen (WO 2009/036854 A1). Bei diesem Detektor werden aber Brenngas und Oxidationsmittel nicht getrennt und erst recht nicht von entgegen gesetzten Seiten zugeführt, sondern treten bereits als Knallgasgemisch in die Brennkammer ein. Die besonderen Vorteile der kugelförmigen Flamme können so nicht erzielt werden.

Normalerweise wird ein Flammenionisationsdetektor mit hohem Wasserstofffluss unter zehnfacher Menge an Stützluft betrieben, was aufgrund des Sauerstoffsbedarfs und der Abschirmung erforderlich ist. In einem planaren Mikrobrenner wird die Flamme vom Brenner selbst abgeschirmt, so dass auf Stutzluft verzichtet werden kann und die Flamme mit Knallgas betrieben werden kann (WO 2009/036854 A1). Mit dem erfindungsgemäßen Gegenstromverfahren des Mikrobrenners lässt sich der Wasserstoff- und Sauerstoffverbrauch noch weiter reduzieren, ohne dass die Flamme ihre Ionisationskraft verliert.
Für die Funktion des Flammenionisationsdetektors muss der planare Mikrobrenner mit drei Elektroden ausgestattet werden: eine Anode und eine Kathode, über die die Spannung angelegt wird, und eine Schutzelektrode, die verhindert, dass durch das Glas fließende Leckstrome miterfasst werden.

Der Gegenstrombrenner kann auch für die Flammenspektrometrie eingesetzt werden. Abhängig von der Analysemethode wird zusätzlich entweder nur ein optisches Spektrometer (Atomemissionsspektrometer, Chemielumeniszenzspektrometer) oder auch eine Strahlungsquelle gebraucht (Atomabsorbtionsspektrometie, Atomfluoreszenzspektrometrie).

Für die Gasanalyse ist eine Abschirmung der Flamme von der Umgebung bedeutend, um Störsignale zu vermeiden. Dazu müssen die Öffnungen der Gasabfuhr ausreichend klein gestaltet werden. Um einen Druckanstieg, der die Flammenstabilität verschlechtert, in der Brennkammer zu verhindern, kann das Gas abgepumpt werden. Gleichzeitig kann der in der Kammer entstehende Unterdruck für die Probenentnahme genutzt werden.

Die Erfindung wird im Folgenden anhand von vorteilhaften Ausführungsformen unter Bezugnahme auf die beigefügten Zeichnungen beispielhaft beschrieben.

Es zeigen:
- Fig. 1-4: vierverschiedene Ausführungsformen in schematischer Ansicht
- Fig. 5: eine Ausführungsform die nicht Teil der Erfindung ist.

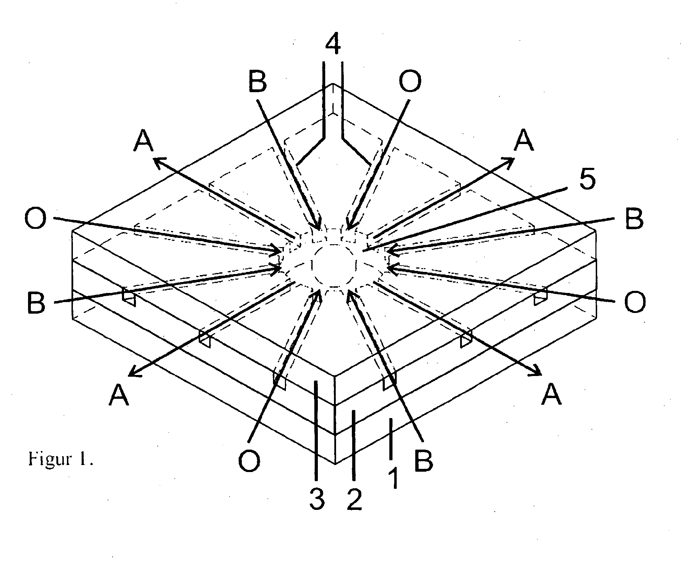

Wie in den Figuren 1-5 gezeigt ist, weist der Gegenstrombrenner der Erfindung drei Substrate auf, im vorliegenden Fall ein unteres Substrat 1 aus Borosilikatglas, ein mittleres Substrat 2 aus Silizium und ein oberes Substrat 3 aus Borosilikatglas. Im mittleren Substrat 2 sind Kanäle 4 angeordnet, die sternförmig auf die Brennkammer 5 gerichtet sind. Die Gase strömen jeweils in Richtung der Pfeile in die Brennkammer 5 ein bzw. aus derselben heraus. Mit "B" sind dabei die Strömungsrichtungen der Brenngase, mit "0" die Strömungsrichtungen der Oxidationsmittel und mit "A" die Strömungsrichtungen der Abgase bezeichnet. Bei der Ausführungsform der Figur 1 treffen jeweils zwei Brenngasstrome aufeinander, treffen jeweils zwei Oxidationsmittelstrome aufeinander und verlassen jeweils zwei entgegengesetzt gerichtete Abgasstrome A die Brennkammer 5. Auf diese Weise ist der Impuls der Flamme insgesamt Null.

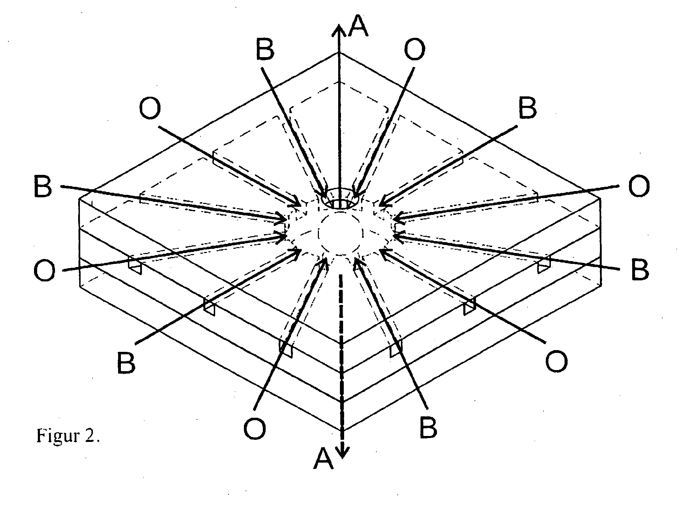

Auch bei der Ausführungsform der Figur 2 treten Brenngase B und Oxidationsmittel 0 durch die Kanäle jeweils entgegengesetzt in der Brennkammer 5 zusammen. Die Abgase verlassen aber die Brennkammer in zur Ebene der Substrate senkrechten Richtung durch entsprechende Öffnungen, was durch die gestrichelten Pfeile A angedeutet ist.

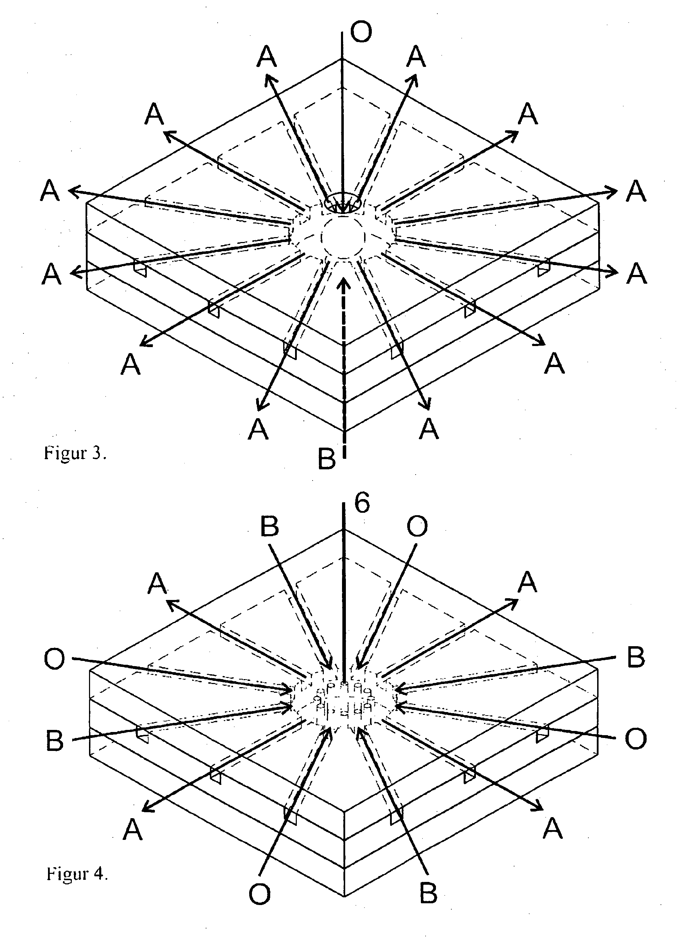

Bei der Ausführungsform der Figur 3 treten Brenngas B und Oxidationsmittel 0 von oben bzw. unten in einer zur Ebene der Substrate senkrechten Richtung in die Brennkammer ein, während das Abgas A die Brennkammer durch die Kanäle im mittleren Substrat 2 verlässt.

Bei der Ausführungsform der Figur 4 treffen wiederum wie bei den Ausführungsformen der Figuren 1 und 2 zwei Brenngasstrome aufeinander, treffen zwei Oxidationsmittelstrome-aufeinander und verlassen zwei Abgasstrome A die Brennkammer 5 in entgegen gesetzten Richtungen. Zusätzlich sind aber noch auf dem unteren Substrat 1 oder dem oberen Substrat 3 angeordnete kleine Zylinder vorgegeben, die den eigentlichen Raum umschließen, in dem die Verbrennung stattfindet. Diese aufrecht stehenden Zylinder sind auf einer Zylindermantelflache um das Zentrum der Brennkammer herum angeordnet.

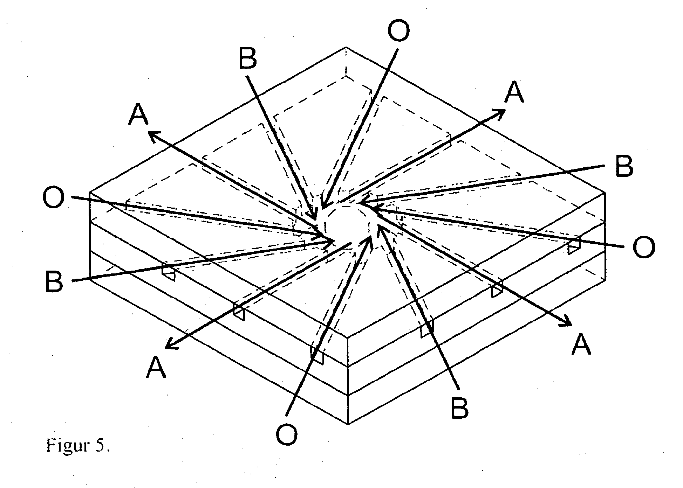

Bei der Ausführungsform der Figur 5, welche nicht Teil der Erfindung ist, sind die Gase nicht auf das Zentrum der Brennkammer 5 gerichtet oder von derselben weg gerichtet, sondern treten in diese tangential ein, wodurch ein stabiler Flammenwirbel erzeugt wird. Wie dies weiter oben erwähnt wurde, hat die sternförmige Anordnung gewisse Vorteile. In vielen anderen Fallen wird man aber auf diese sternförmige Anordnung verzichten und z.B. nur zwei aus entgegen gesetzten Richtungen aufeinander zu gerichtete Kanäle verwenden, durch die einerseits Brenngas und andererseits Oxidationsmittel zugeführt wird.

## Patentansprüche

1. Gegenstrombrenner mit einer Brennkammer (5), der das Brenngas (B) und das Oxidationsmittel (0) von entgegen gesetzten Seiten zuführbar sind, wobei des Gegenstrombrenner drei planare Substrate (1, 2, 3) aufweist, die übereinander liegend miteinander verbunden sind, wobei das mittlere Substrat (2) die Brennkammer (5) aufweist, von der in der Ebene des Substrats liegende Kanäle (4) in entgegen gesetzten Richtungen zum Rand führen und die durch die Kanäle eingeführten Gase aus entgegengesetzten Richtungen in der Brennkammer aufeinander stoßen, wobei das obere (3) und das untere Substrat (1) im wesentlichen geschlossen sind und wobei zumindest das mittlere Substrat (2) mit Methoden der Mikrosystemtechnik hergestellt ist.

2. Gegenstrombrenner nach Anspruch 1, **dadurch gekennzeichnet, dass** zwei aufeinander zu gerichtete Kanäle (4) vorgesehen sind, wobei durch den einen das Brenngas und durch den anderen das Oxidationsmittel zuführbar sind.

3. Gegenstrombrenner nach Anspruch 1, **dadurch gekennzeichnet, dass** die in der Ebene des Substrats liegenden Kanäle (4) sternförmig zum Rand führen.

4. Gegenstrombrenner nach einem der Ansprüche 1 bis 3, **dadurch gekennzeichnet, dass** auch das obere (3) und/oder untere (1) Substrat mit Methoden der Mikrosystemtechnik strukturiert ist.

5. Gegenstrombrenner nach einem der Ansprüche 1, 3 oder 4, **dadurch gekennzeichnet, dass** das obere (3) und das untere (1) Substrat vollständig geschlossen sind.

6. Gegenstrombrenner nach einem der Ansprüche 1 bis 4, **dadurch gekennzeichnet, dass** das obere (3) und das untere Substrat (1) zur Brennkammer gerichtete Öffnungen aufweisen, durch die Gas senkrecht zur Ebene der Substrate (1, 2, 3) ein- oder austreten kann.

7. Gegenstrombrenner nach einem der Anspruche 1 bis 6, **dadurch gekennzeichnet, dass** das mittlere Substrat (2) aus Silizium besteht.

8. Gegenstrombrenner nach einem der Anspruche 1 bis 7, **dadurch gekennzeichnet, dass** das obere (3) und/oder untere (1) Substrat aus Borosilikatglas besteht.

9. Gegenstrombrenner nach einem der Ansprüche 1 bis 8, **dadurch gekennzeichnet, dass** er Wärmetauscher aufweist.

10. Gegenstrombrenner nach einem der Anspruche 1 bis 9, **dadurch gekennzeichnet, dass** die Kanäle (4) für mindestens eine der Strömungen mit einer den Gegenstrombrenner umgebenden Druckausgleichskammer verbindbar sind.

11. Gegenstrombrenner nach einem der Anspruche 1 bis 10, **dadurch gekennzeichnet, dass** die Flamme stabilisierende Elemente auf dem oberen (3) und/oder unteren (1) Substrat aufgebracht sind.

12. Gegenstrombrenner nach einem der Anspruche 1 bis 11, **dadurch gekennzeichnet, dass** die Kanäle (4) auf den Mittelpunkt der Brennkammer (5) gerichtet sind.

13. Gegenstrombrenner nach einem der Anspruche 1 bis 11, **dadurch gekennzeichnet, dass** die Kanäle (4) tangential auf den Umfang eines gedachten Zylinders gerichtet sind, der koaxial mit der Brennkammer (5) angeordnet ist.

14. Gegenstrombrenner nach einem der Anspruche 1 bis 13, **dadurch gekennzeichnet, dass** die Kanäle (4) im zur Brennkammer (5) gerichteten Endbereich unterschiedlich Querschnitte aufweisen.

15. Gegenstrombrenner nach einem der Anspruche 1 bis 14, **dadurch gekennzeichnet, dass** die oberen (3) und/oder unteren (1) Substrate im Bereich der Brennkammer (5) mit die Verbrennung beschleunigenden Materialien beschichtet sind.

## Claims

1. Counterflow burner having a combustion chamber (5) to which the combustible gas (B) and the oxidising agent (0) can be fed from opposite sides, wherein the counterflow burner has three planar substrates (1, 2, 3) which are interconnected, lying one above the other, the middle substrate (2) has the combustion chamber (5), from which passages (4), lying in the plane of the substrate, lead in opposite directions to the edge and the gases introduced through the passages from opposite directions collide in the combustion chamber, the upper (3) substrate and the lower substrate (1) are basically closed, and at least the middle substrate (2) is produced using methods of microsystem technology.

2. Counterflow burner according to Claim 1, **characterised in that** provision is made for two passages (4) which are directed towards each other, wherein the combustible gas can be fed through the one passage and the oxidising agent can be fed through the other.

3. Counterflow burner according to Claim 1, **characterised in that** the passages (4) which lie in the plane of the substrate lead to the edge in a star-like manner.

4. Counterflow burner according to one of Claims 1 to 3, **characterised in that** the upper substrate (3) and/or the lower substrate (1) are, or is, also structured using methods of microsystem technology.

5. Counterflow burner according to one of Claims 1, 3 or 4, **characterised in that** the upper substrate (3) and the lower substrate (1) are completely closed.

6. Counterflow burner according to one of Claims 1 to 4, **characterised in that** the upper substrate (3) and the lower substrate (1) have openings which are directed towards the combustion chamber and through which gas can enter or discharge perpendicularly to the plane of the substrates (1, 2, 3).

7. Counterflow burner according to one of Claims 1 to 6, **characterised in that** the middle substrate (2) consists of silicon.

8. Counterflow burner according to one of Claims 1 to 7, **characterised in that** the upper substrate (3) and/or the lower substrate (1) consist(s) of borosilicate glass.

9. Counterflow burner according to one of Claims 1 to 8, **characterised in that** it features heat exchangers.

10. Counterflow burner according to one of Claims 1 to 9, **characterised in that** the passages (4) for at least one of the flows can be connected to a pressure compensating chamber which surrounds the counterflow burner.

11. Counterflow burner according to one of Claims 1 to 10, **characterised in that** the flame stabilising elements are applied to the upper substrate (3) and/or to the lower substrate (1).

12. Counterflow burner according to one of Claims 1 to 11, **characterised in that** the passages (4) are directed towards the middle point of the combustion chamber (5).

13. Counterflow burner according to one of Claims 1 to 11, **characterised in that** the passages (4) are directed tangentially towards the circumference of an imaginary cylinder which is arranged coaxially with the combustion chamber (5).

14. Counterflow burner according to one of Claims 1 to 13, **characterised in that** the passages (4) have different cross sections in the end region which is directed towards the combustion chamber (5).

15. Counterflow burner according to one of Claims 1 to 14, **characterised in that** the upper substrate (3) and/or the lower substrate (1) are, or is, coated in the region of the combustion chamber (5) with materials which accelerate the combustion.

## Revendications

1. Brûleur à contre-flux avec une chambre de combustion (5) à laquelle le gaz combustible (B) et l'agent oxydant (O) peuvent être fournis par des côtés opposés, dans lequel le brûleur à contre-flux présente trois substrats plans (1, 2, 3) qui sont reliés les uns aux autres en position superposée, dans lequel le substrat médian (2) présente la chambre de combustion (5) à partir de laquelle des canaux (4) situés dans le plan du substrat conduisent dans des directions opposées jusqu'au bord et les gaz introduits par les canaux dans des directions opposées se heurtent mutuellement dans la chambre de combustion, dans lequel le substrat supérieur (3) et le substrat inférieur (1) sont essentiellement fermés et dans lequel au moins le substrat médian (2) est fabriqué par des procédés de la technique des micro-systèmes.

2. Brûleur à contre-flux selon la revendication 1, **caractérisé en ce qu'**il est prévu deux canaux (4) dirigés l'un vers l'autre, dans lequel le gaz combustible peut être fourni par l'un et l'agent oxydant peut être fourni par l'autre.

3. Brûleur à contre-flux selon la revendication 1, **caractérisé en ce que** les canaux (4) situés dans le plan du substrat conduisent en forme d'étoile vers le bord.

4. Brûleur à contre-flux selon l'une quelconque des revendications 1 à 3, **caractérisé en ce que** le substrat supérieur (3) et/ou le substrat inférieur (1) est/sont structuré(s) par des procédés de la technique des micro-systèmes.

5. Brûleur à contre-flux selon l'une quelconque des revendications 1, 3 ou 4, **caractérisé en ce que** le substrat supérieur (3) et le substrat inférieur (1) sont entièrement fermés.

6. Brûleur à contre-flux selon l'une quelconque des revendications 1 à 4, **caractérisé en ce que** le substrat supérieur (3) e le substrat inférieur (1) présentent des ouvertures dirigées vers la chambre de combustion, par lesquelles du gaz peut entrer ou sortir perpendiculairement au plan des substrats (1, 2, 3).

7. Brûleur à contre-flux selon l'une quelconque des revendications 1 à 6, **caractérisé en ce que** le substrat médian (2) est constitué de silicium.

8. Brûleur à contre-flux selon l'une quelconque des revendications 1 à 7, **caractérisé en ce que** le substrat supérieur (3) et/ou le substrat inférieur (1) est/sont constitués de verre au borosilicate.

9. Brûleur à contre-flux selon l'une quelconque des revendications 1 à 8, **caractérisé en ce qu'**il présente des échangeurs de chaleur.

10. Brûleur à contre-flux selon l'une quelconque des revendications 1 à 9, **caractérisé en ce que** les canaux (4) pour au moins un des écoulements peuvent être raccordés à une chambre d'équilibrage de la pression entourant le brûleur à contre-flux.

11. Brûleur à contre-flux selon l'une quelconque des revendications 1 à 10, **caractérisé en ce que** des éléments de stabilisation de la flamme sont installés sur le substrat supérieur (3) et/ou le substrat inférieur (1).

12. Brûleur à contre-flux selon l'une quelconque des revendications 1 à 11, **caractérisé en ce que** les canaux (4) sont dirigés vers le centre de la chambre de combustion (5).

13. Brûleur à contre-flux selon l'une quelconque des revendications 1 à 11, **caractérisé en ce que** les canaux (4) sont dirigés tangentiellement au pourtour d'un cylindre imaginaire, qui est disposé coaxialement à la chambre de combustion (5).

14. Brûleur à contre-flux selon l'une quelconque des revendications 1 à 13, **caractérisé en ce que** les canaux (4) présentent des sections transversales différentes dans la région d'extrémité dirigée vers la chambre de combustion (5).

15. Brûleur à contre-flux selon l'une quelconque des revendications 1 à 14, **caractérisé en ce que** les substrats supérieurs (3) et/ou inférieurs (1) sont revêtus de matériaux accélérant la combustion dans la région de la chambre de combustion (5).
